# EUROPEAN PATENT SPECIFICATION

(11) **EP 4 229 129 B1**
(45) Date of publication and mention of the grant of the patent: **01.01.2025**
(21) Application number: 21790882.1
(22) Date of filing: 13.10.2021
(51) Int. Cl.: C08L 21/00, C08L 23/16

(54) **HEAT STABLE ETHYLENE COPOLYMER RUBBER BLENDS**
WÄRMEBESTÄNDIGE ETHYLENCOPOLYMERKAUTSCHUKMISCHUNGEN
MÉLANGES DE CAOUTCHOUC DE COPOLYMÈRE D'ÉTHYLÈNE STABLES À LA CHALEUR

(30) Priority: 14.10.2020 EP 20201776
(43) Date of publication of application: 23.08.2023
(73) Proprietor: Arlanxeo Netherlands B.V., 6167 RD Geleen (NL)
(72) Inventor: JANSEN, John, 6431 GL Hoensbroek (NL)
(74) Representative: Müller, Lars
(86) International application number: PCT/EP2021/078248
(87) International publication number: WO 2022/079072

(56) References cited:
- EP-A1- 0 704 484
- EP-A1- 1 495 857
- EP-A1- 1 683 835
- WO-A1-2020/058267
- WO-A1-98/54252
- US-A- 6 140 441
- US-A1- 2018 237 553
- US-B1- 6 346 577

## Description

Ethylene-propylene-diene rubbers (EPDM) are widely used for making sealants and hoses. For example, in international patent application WO98/54252 compositions of polypropylene and EPDMs are described that are fluid resistant. In European Patent Application EP1 495 857 an air conditioning hose containing an EPDM composition is described. In European Patent Application EP1683835 an EPDM composition is described that is resistant to 300°C for 24 hours in a hot water immersion test.

In the automotive industry EPDM compositions are widely used, for example, to produce under-the-hood radiator hoses. Such under-the-hood hoses have to be heat-resistant in hot air because of the heat produced by the engines. Peroxide-cured EPDM grades are available that withstand heat treatment in air at 150°C at 168 hours with more than 80% retention of their mechanical properties. In the last few years technical advancements in internal combustion engines have been made and highly efficient turbo-charged combustion engines run at higher temperatures than their earlier counterparts. Therefore, there is a need to provide EPDM rubber compositions that are more heat resistant. In international patent application WO2019/157687 A1 compositions comprising an EPDM rubber are reported to have improved heat ageing properties when exposed to hot air.

There is a need for providing further EPDM compositions with good heat ageing properties. Preferably such compositions are suitable for making a hose.

### Summary

In one aspect there is provided a composition comprising a blend of a first curable ethylene-copolymer and a second curable ethylene-copolymer wherein
(i) the first curable ethylene copolymer comprises from 50 % to 75 % by weight of units derived from ethylene, from more than 0.5 % and up to 5.0 % by weight of units derived from one or more diene selected from the group consisting of non-conjugated dienes having from 10 to 30 carbon atoms and comprising at least two cyclic units and having at least two endo-cyclic double bonds, preferably comprising dicyclopentadiene, and further comprising at least 15 % by weight of units derived from propylene, and wherein the amounts expressed in % by weight are based on the total weight of the first ethylene copolymer, which corresponds to 100%;
(ii) the second curable ethylene copolymer comprises from 45 % to 65 % by weight of units derived from ethylene, from about 1.1 to 4.1 % by weight of units derived from one or more diene selected from the group consisting of non-conjugated dienes having from 8 to 24 carbon atoms and having at least one cyclic unit and having an endocyclic double bond and a non-terminal exocyclic double bond, preferably comprising ethylidene norbornene, and further comprising at least 15 % by weight, preferably at least 25% by weight, of units derived from propylene, and wherein the amounts expressed in % by weight are based on the total weight of the second ethylene copolymer corresponds to 100%;
(iii) wherein the weight ratio of the first to the second ethylene copolymer is from about 1: 10 to 10: 1.

In another aspect there is provided the use of the composition for making a hose.

In a further aspect there is provided the use of the composition for making a layer for a layered article.

In yet another aspect there is provided a process of making a hose comprising extruding the composition into a hose or into a layer of multi-layer hose and subjecting the composition to curing.

In a further aspect there is provided a hose comprising the composition in a cured form.

In another aspect there is provided a process for making the composition comprising blending the first curable ethylene-copolymer with the second curable ethylene-copolymer, and, optionally, comprising adding one or more additives.

In yet another aspect there is provided an article having a change in elongation at tear, determined according to DIN53504, of less than 10% after a heat treatment in air of 160°C for 96 hours, wherein the cured article comprises the reaction product of a curing reaction, wherein the curing reaction comprises subjecting a composition comprising the blend of the first curable ethylene-copolymer and the second curable ethylene-copolymer to a curing reaction.

### Detailed Description

In the following description norms may be used. If not indicated otherwise, the norms are used in the version that was in force on March 1, 2020. If no version was in force at that date because, for example, the norm has expired, then the version is referred to that was in force at a date that is closest to March 1, 2020.

In the following description the amounts of ingredients of a composition or polymer may be indicated interchangeably by "weight percent", "wt. %" or "% by weight". The terms "weight percent", "wt. %" or "% by weight" are used interchangeably and are based on the total weight of the composition or polymer, respectively, which is 100 % unless indicated otherwise.

The term "phr" means parts by weight per hundred parts by weight of rubber.

Ranges identified in this disclosure include and disclose all values between the endpoints of the range and also include the end points unless stated otherwise.

### First ethylene copolymers

The first ethylene copolymer according to the present disclosure is curable. This means the polymer can be cross-linked (cured), for example upon reaction with one or more curing agents.

The first ethylene copolymer contains from 50 % to 75 % by weight, based on the total weight of the first copolymer of units derived from ethylene. Preferably, the copolymer comprises from 55 % to 72 % or from 60 % to 70 % by weight of units derived from ethylene.

In addition to units derived from ethylene, the copolymer according to the present disclosure has more than 10 % by weight of units derived from propylene, based on the total weight of the copolymer. Preferably, the first copolymer has at least 15 % by weight and more preferably at least 20 % by weight of units derived from propylene.

In addition to units derived from ethylene and propylene, the first copolymer comprises of units derived from propylene and from more than 0.5 % and up to 5.0 % by weight, based on the total weight of the first copolymer, of units derived from one or more diene selected from the group consisting of non-conjugated dienes having from 10 to 30 carbon atoms and comprising at least two cyclic units and having at least two endo-cyclic double bonds. "Non-conjugated" as used herein above and below means the carbon-carbon double bonds of the diene are seperated from each other by at least two carbon atoms. A preferred example of such dienes includes dicylcopentadiene (DCPD). Dicyclopentadiene is represented by formula (I):

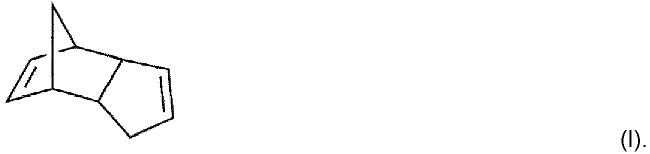

In a preferred embodiment of the present disclosure the first curable ethylene copolymer comprises from 0.5 % to 5.0 % by weight, preferably from more than 1.0 % and up to 4.5 % by weight, based on the total weight of the polymer, of units derived from dicyclopentadiene.

In another preferred embodiment of the present disclosure the first curable ethylene copolymer comprises from 0.5 % to 5.0 % by weight, preferably from more than 1.0% and up to 4.5 % by weight, based on the total weight of the copolymer, of units derived from dicyclopentadiene and from 55 % to 72 % or from 60 % to 70 % by weight, based on the total weight of the copolymer, of units derived from ethylene.

In one embodiment of the present disclosure the first copolymer only comprises dicyclopentadiene as non-conjugated diene.

The first curable ethylene copolymer may have a Mooney viscosity ML 1+4 at 100°C of from about 40 to about 80, preferably between 52 and 75.

The first copolymer may have a weight-averaged molecular weight of from about 100.000 to 500.000 g/mole. Preferably, the first curable copolymer has a weight-averaged molecular weight a from about 150.000 g/mole to about 390.000 g/mole, for example from about 200.000 to about 310.000 g/mole.

The first curable copolymer may have a molecular weight distribution (MWD) of from about 2 to 8, preferably from about 3 to 6.

The first curable copolymer may have a branching degree (δΔ) of from 10 to 40, preferably from 12 to 35 or from 18 to 28. The level of branching Δδ, expressed in degrees, is the difference between the phase angle δ at a frequency of 0.1 rad/s and the phase angle δ at a frequency of 100 rad/s, as determined by Dynamic Mechanical Spectroscopy (DMS) at 125 °C. Δδ is a measure for the presence of long chain branches in the polymer structure. The lower the value of Δδ the more long chain branches are present in the polymer and has been introduced by H.C. Booij, in Kautschuk + Gummi Kunststoffe, Vol. 44, No. 2, pages 128-130,1991.

### Second ethylene copolymers

The second ethylene copolymer according to the present disclosure is curable. This means the polymer can be cross-linked (cured), for example upon reaction with one or more curing agents.

The second ethylene copolymer contains from 45% to 65% by weight, based on the total weight of the second copolymer, of units derived from ethylene. Preferably, the copolymer comprises from about 50% to about 60% by weight of units derived from ethylene.

In addition to units derived from ethylene, the second copolymer according to the present disclosure has more than 15% by weight of units derived from propylene, based on the total weight of the copolymer. Preferably, the second copolymer has at least 25% by weight and more preferably at least 30 % by weight of units derived from propylene.

In addition to units derived from ethylene and propylene, the second copolymer comprises from 1.1% to 4.1% by weight of units derived from one or diene selected from the group consisting of non-conjugated dienes having from 9 to 24 carbon atoms and having at least one cyclic unit and having an endocyclic double bond and a non-terminal exocyclic double bond. Examples of such non-conjugated dienes include but are not limited to 5-methylene-2-norbornene and 5-ethylidene-2-norbornene (ENB). In a preferred embodiment of the present disclosure the second curable ethylene copolymer comprises from 1.1. to 2.3% by weight, based on the total weight of the copolymer, of units derived from ethylidene norbornene (ENB). In one embodiment the second copolymer comprises from 1.1 to 4.1 % by weight, or from 1.1 to 2.3% by weight, of the dienes selected from the group consisting of non-conjugated dienes having from 9 to 24 carbon atoms and having at least one cyclic unit and having an endocyclic double bond and a non-terminal exocyclic double bond and wherein these one or more dienes are all selected from ENB. ENB can be represented by formula (II):

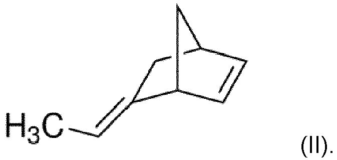

In another preferred embodiment of the present disclosure, the composition the second curable ethylene copolymer comprises from 1.1 to 4.1 % by weight, or from 1.1 to 2.3 % by weight, of units derived from ethylidene norbornene (ENB), from 50 % to 60 % by weight of units derived from ethylene and from at least 30% by weight of units derived from propylene (the % by weights are based on the total weight of the second copolymer, which corresponds to 100%).

The second curable ethylene copolymer typically may have a Mooney viscosity, ML 1+4 at 100°C of from 35 to 65.

The second curable ethylene copolymer typically may have a weight average molecular weight (Mw) of from about 75.000 to 500.000 g/mole. In one embodiment of the present disclosure the second copolymer has an Mw of from about 100.000 to 300.000 g/mole.

Typically, the second ethylene-copolymer of the present disclosure may have a molecular weight distribution (MWD) of at least 1.5, for example from 3.0 to 35, preferably from about 2.0 to 4.5, or from 2.0 to 4.0 or from 2.7 to 3.3.

The second ethylene-copolymer according to the present disclosure may have a level of branching Δδ between 2 and 50, preferably from 5 to 35, or from 10 to 30, or from 11 to 21.

### Other comonomers

The first or the second ethylene copolymers of the present disclosure, or both, optionally may contain one or more units derived from one or more other comonomers.

### C₄-C₂₀-α-olefins:

For example, either the first or the second copolymer or both may contain units derived from one or more C₄-C₂₀-α-olefins. C₄-C₂₀-α-olefins are olefins containing 4 to 20 carbon atoms and having a single aliphatic carbon-carbon double bond. The double bond is located at the terminal front end (alpha-position) of the olefin. The α- olefins can be aromatic or aliphatic, linear, branched or cyclic. Examples include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-hepta-decene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. The alpha olefins may be used in combination.

### Linear, non-conjugated dienes:

The first or the second copolymer or both may or may not contain one or more units derived from one or more linear, non-conjugated dienes. Suitable non-conjugated linear dienes include dienes with 6 to 30 carbon atoms (C₆-C₃₀-polyenes, more preferably C₆-C₃₀-dienes). Specific examples of linear, non-conjugated dienes include 1,4-hexadiene, 3-methyl-1,4-hexadiene, 4-methyl-1,4-hexadiene, 5-methyl-1,4-hexadiene, 4-ethyl-1,4-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 1,6-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 1,5,9-decatriene, 6-methyl-1,6-undecadiene, 9-methyl-1,8-undecadiene and combinations thereof.

### Aromatic, non-conjugated polyenes:

The first or the second copolymer or both may or may not contain one or more units derived from one or more aromatic, non-conjugated polyenes. Examples of aromatic non-conjugated polyenes include vinylbenzene (including its isomers) and vinyl-isopropenylbenzene (including its isomers).

### Vinyl substituted non-conjugated dienes:

The first or the second copolymer or both may or may not contain one or more units derived from one or more aliphatic, vinyl substituted linear or monocyclic or bicyclic dienes. Typically, theses dienes contain from 8-24 C-atoms. Examples include but are not limited to 1,4-divinylcyclohexane, 1,3-divinylcyclohexane, 1,3-divinylcyclopentane, 1,5-divinylcyclooctane, 1-allyl-4-vinylcyclo-hexane, 1,4 diallyl cyclohexane, 1-allyl-5-vinylcyclooctane, 1,5-diallylcyclooctane, 1-allyl-4-isopropenyl-cyclohexane, 1-isopropenyl-4-vinylcyclohexane and 1-isopropenyl-3-vinylcyclopentane, dicyclopentadiene, 1,4-cyclohexadiene and vinyl norbornenes, for example 5-vinyl-2-norbornene (VNB). These dienes, also referred herein to as "dual polymerizable dienes", may cause or contribute to the formation of polymer branches. Preferred examples of such dienes include 5-vinyl-2-norbornene (VNB), 1,7-octadiene and 1,9-decadiene with 5-vinyl-2-norbornene (VNB) being most preferred. VNB can be represented by formula (III):

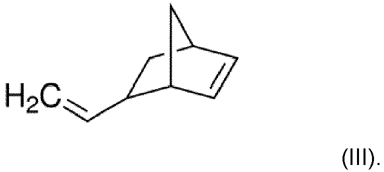

The first and /or second copolymer may have units derived from one or more dual polymerizable dienes in amounts of less than 5% by weight, for example from 0% to 1.0 % by weight, based on the total weight of the copolymer.

The first or the second ethylene-copolymer according to the present disclosure, or both, optionally, may not contain units derived from any other comonomers.

Preferably, the sum of units of the first ethylene copolymer that are derived from ethylene, propylene and non-conjugated diene selected from the group consisting of non-conjugated dienes having from 10 to 30 carbon atoms and comprising at least two cyclic units and having at least two endo-cyclic double bonds, preferably DCPD, is greater than 75 % by weight, preferably greater than 95 % by weight, and more preferably at least 98 % or even by weight, based on the total weight of the first ethylene copolymer, which corresponds to 100%.

Preferably, the sum of units of the second ethylene copolymer that are derived from ethylene, propylene and non-conjugated diene selected from the group consisting of non-conjugated dienes having from 9 to 24 carbon atoms and having at least one cyclic unit and having an endocyclic double bond and a non-terminal exocyclic double, preferably ENB, is greater than 75 % by weight, preferably greater than 95 % by weight, and more preferably at least 98 % or even by weight, based on the total weight of the second ethylene copolymer, which corresponds to 100%.

### Preparation of the first and second copolymers

The first and second copolymers according to the present disclosure can be prepared as known in the art of making ethylene copolymers, for example EPDMs. The copolymers may be produced by using conventional catalysts, like for example Ziegler-Natta-catalysts or metallocene-type catalysts or by a combination of different catalysts. Ziegler-Natta catalysts are non-metallocene type catalysts based on halides of transition metals, in particular titanium or vanadium. Metallocene-type catalysts are organometallic catalysts wherein the metal is bonded to at least one cyclic organic ligand, preferably at least one cyclopentadienyl or at least one indenyl ligand.

The polymerization can be carried out in the gas phase, in a slurry, or in solution in an inert solvent, preferably a hydrocarbon solvent.

The polymerisation can take place in different polymerization zones. A polymerization zone is a vessel where a polymerization takes place and could be either a batch reactor or a continuous reactor. When multiple reactors are employed (for example multiple reactors connected in series or in parallel), each reactor is considered as a separate polymerisation zone.

Preferred solvents include one or more hydrocarbon solvent. Suitable solvents include C₅₋₁₂ hydrocarbons such as pentane, hexane, heptane, octane, cyclohexane, methylcyclohexane, pentamethyl heptane, hydrogenated naphtha, isomers and mixtures thereof. The polymerization may be conducted at temperatures from 10 to 250 °C, depending on the product being made. Most preferably the polymerisation is performed at temperatures greater than 50 °C, if performed in solution.

In a preferred embodiment the polymerization includes the use of one or more chain transfer agent to control the molecular weight of the polymer. A preferred chain transfer agent includes hydrogen (H₂). The diene content per polymer chain can be controlled by controlling the diene content and molecular weight as known in the art.

The first or second copolymer or both may be oil-extended and can be obtained by blending one or more extender oils with the ethylene-copolymer during the polymer preparation and prior to working up the polymer, more specifically prior to removing the solvent. Preferably the one or more oil is added to the reaction solution after it has left the reaction vessel and/or after the polymerization reaction has been terminated to produce the oil-extended polymer and before the solvent of the reaction solution is removed. For example, the addition may take place after the polymerization reactor, but before the removal of volatiles, for instance before a steam stripper or a dry finishing extruder. Preferably the extender oil is blended with the ethylene copolymer when it is dissolved or suspended in the reaction media, preferably coming from the polymerization reactor. In one embodiment of the present disclosure the first and second copolymer are not oil-extended.

### Blends of first and second copolymer

The compositions according to the present disclosure contain a blend of the first and the second copolymers according to the present disclosure. The blends may contain the first and the second copolymer in a weight ratio of from about 10 : 1 to 1 : 10, for example in a weight ratio of from 5:1 to 1: 5, preferably from 3:1 to 1:3. In one embodiment the weight ratio of first to second copolymer is from about 1:1 to about 1:5 : 1 to about 1 : 1.5 or from 1: 2 to 2 : 1.

In one embodiment of the present disclosure the first ethylene copolymer and the second ethylene copolymer are chosen such that the weight ratio of dicyclopentadiene to ENB is from about 1 : 1 to about 1 : 3.

In the present disclosure there are also provided compositions containing the blend. In addition to the blend the composition may also contain one or more than one additive. In one embodiment of the present disclosure the composition comprises from at least 90% by weight, based on the total weight of the composition of the blend of first and second ethylene copolymer. In another embodiment of the present disclosure there is provided a composition comprising at least 10% of the blend of the present disclosure, preferably at least 25% by weight, based on the total weight of the composition. In one embodiment of the present disclosure the composition has a Mooney viscosity ML 1+4 at 100°C of from 45 to 85, preferably from 57 to 67.

Additives may include (a) curing agents and curing accelerators, (b) filler, (c) rubber auxiliaries and (d) other additives.

### Curing agents:

Suitable curing (vulcanizing) agents include inorganic and organic peroxides. Organic peroxides include but are not limited to dicumyl peroxide (DCP), 2,5-di(t-butylperoxy)-2,5-dimethyl-hexane (DTBPH), di(t-butylperoxyisopropyl)benzene (DTBPIB), 2,5-di(benzoylperoxy)-2,5-dimethylhexane, 2,5-(t-butylperoxy)-2,5-dimethyl-3-hexyne (DTBPHY), di-t-butyl-peroxide and di-t-butylperoxide-3,3,5-trimethylcyclohexane (DTBTCH) or mixtures of these peroxides. The peroxide-based curing agent may be used in an amount from 0.1 to 15 phr, preferably from 0.5 to 5 phr.

The vulcanization accelerators, if used, are used preferably in an amount of from 0.1 to 10 parts by weight, and more preferably from 0.2 to 5 parts by weight and most preferably between 0.25 and 2 phr per 100 parts by weight of the ethylene-copolymer.

Examples of the vulcanization activators include but are not limited to metal oxides, such as magnesium oxide and zinc oxide, stearic acid or its metal salts stearic acid or combinations thereof like, for example zinc oxide combined with stearic acid. The vulcanization activators are used usually in amounts from 0.5 to 10 phr based on the ethylene copolymer, preferably in amounts from 0.5 to 5 phr.

When peroxide or a mixture of peroxides is used as the vulcanizing agent, peroxide cross-linking coagents may be used. Examples of such peroxide cross-linking coagent are cyanurate compounds, such as triallyl cyanurate and triallylisocyanurate, (meth)acrylate compounds, such as trimethylolpropane-trimethacrylate and ethyleneglyclol-dimethacrylate, zinc-dimethacrylate and zincdiacrylate, divinylbenzene, p-quinonedioxime, m-phenylene dimaleimide, (high vinyl) polybutadiene, and combinations thereof. Preferably, 0.1 to 5 phr of the peroxide cross-linking coagents may be used. More preferably from 0.25 to 2.5 phr of peroxide cross-linking coagent may be used.

### Filler:

Preferably the filler may be used in an amount of 20 to 500 phr. Preferred fillers include carbons including carbon black, silica or particles containing -Si-O- units, calcium carbonate, talc and clay, which are conventionally used in rubbers. Carbon black is classified according ASTM D-1765 for its particle size (BET in m²/g) and structure (DBP adsorption in cm³/100 g). Preferably carbon black fillers are used with a BET number in from 5 to 150, and DBP numbers in from 30 to 140. In the industry these types of carbon blacks are often designated to by abbreviations, such as MT, SRF, GPF, FEF, HAF, ISAF, SAF. The fillers may be surface treated, for example with suitable silanes. Combinations of two or more of such fillers may be used. Most preferably the filler comprises carbon black and/or a silanized silica.

Further fillers may include one or more than one other rubber including EPDM rubbers other than the first and second ethylene copolymers and combinations thereof.

### Rubber auxiliaries:

Rubber auxiliaries include those commonly used in the art of rubber compounding. Examples include but are not limited to antioxidants (e.g., hindered phenolics such as commercially available under the trade designation IRGANOX 1010 or IRGANOX 1076 from BASF; phosphites (for example those commercially available under the trade designation IRGAFOS 168, dessicants (e.g. calcium oxide), tackifiers (e.g. polybutenes, terpene resins, aliphatic and aromatic hydrocarbon resins, alkali metal and glycerol stearates, and hydrogenated rosins and the like), bonding agents, heat stabilizers; antiblocking agents; release agents; anti-static agents pigments; colorants; dyes, processing aids (factice, fatty acids and their metal salts including zinc stearate, magnesium stearate or calcium stearate), antioxidants, heat stabilisers (e.g. poly-2,2,4-trimethyl-1,2-dihydroquinoline or zinc 2-mercaptobenzimidazole), UV stabilisers, anti-ozonants, blowing agents and mould releasing agents, partitioning agents (e.g. poly-or di-ethylene glycols), plasticizers (plasticizer lubricating oil, paraffin, liquid paraffin, petroleum asphalt, vaseline, low molecular weight polyisobutylene or polybutylene, liquid EPDM or EPM, coal tar pitch, castor oil, linseed oil, beeswax, atactic polypropylene and cumarone indene resin). Plasticizers may be used in amounts from 20 to 250 phr.

### Other additives:

Other additives as known in the art may also be used.

### Process of making blends

The first and the second copolymers according to the present disclosure are combined to produce a blend, hereinafter also referred to as "rubber blend". The copolymers may be combined by dry blending or wet blending. By dry blending the copolymers are blended as solids, for example in a rubber mixer or a rubber mill. In the wet blending process at least one of the first and second copolymer is present dissolved or dispersed in a liquid. For example, a reaction mixture obtained from the polymerization reaction of the first copolymer may be blended with the second copolymer or with a reaction mixture containing the second copolymer or vice versa. The liquid is subsequently reduced or completely removed.

The some or all additives may be added to the first or second copolymer or both before, during or after making the rubber blend. Preferably, the additives are added to the rubber blend. Typically, the curing agents are added separately, preferably last.

A typical process comprises
(i) mixing the first and second ethylene copolymer,
(ii) adding one or more fillers,
(iii) adding one or more other rubber additives, preferably including at least one plasticizer,
(iv) adding one or more curing agent;
to form a vulcanizable rubber composition.

The mixing preferably comprises kneading, for example with conventional rubber mixing equipment including, for example, kneaders, open roll mills, internal mixers, or extruders. Mixing can be done in one or more steps as known to a man skilled in the art.

The blends according to the present disclosure may be shaped for storage or handling or for further processing into compounds or articles. The blends may be shaped into forms including bales, pellets, powder, sheets or granules.

### Articles and applications

To produce articles the curable (vulcanizable) rubber compounds are subjected to at least one shaping step and are shaped, for example by extruding and/or moulding, and to at least one vulcanization step. The vulcanization may take place during or after shaping, for example during or after extrusion or moulding. Articles made by using the ethylene-copolymer according to the present disclosure contain the polymer in cured form, i.e. the polymer is cross-linked either with itself or with other cross-linkable ingredients in the compound or composition used to make the article, for example other curable rubbers.

The ethylene-copolymer blends according to the present disclosure and the compositions and compounds containing them may be used in a variety of end-use applications, including any application suitable for EPDM polymers. Examples include but are not limited to hoses, belts, seals, engine mounts, a roofing material, or gaskets. Preferred articles include hoses, for example coolant hoses. Coolant hoses are typically used to feed, transport or circulate a coolant medium. Examples of coolant hoses are described, for example, in international patent application WO2013/079293A1.

In one embodiment of the present disclosure there is provided an article having a change in elongation at tear, determined according to DIN53504, of less than 10% after a heat treatment in air of 160°C for 96 hours, wherein the cured article comprises the reaction product of a curing reaction, wherein the curing reaction comprises subjecting a composition comprising the ethylene-copolymer blends according to the present disclosure to a curing reaction. In embodiment of the present disclosure the article has a change in tensile strength, determined according to DIN53504, of less than 10% after a heat treatment in air of 150°C for 1008 hours. In another embodiment of the present disclosure the article is a coolant hose.

The disclosure will now be further illustrated by way of examples but with no intention to limit the disclosure to these examples and the embodiments used in the examples.

### Test methods

### Polymer testing

### Polymer composition:

Fourier transformation infrared spectroscopy (FT-IR) can be used to determine the composition of the copolymers according to ASTM D 3900 for the C2/C3 ratio and D 6047 for the diene content on pressed polymer films.

### Molecular weights and molecular weight distribution:

The molecular weight of the polymer (Mw), the number-averaged molecular weight of the polymer (Mn), the z average molecular weight (Mz) and the molecular weight distribution (MWD, defined as the ratio between Mw and Mn) of the ethylene-copolymers can be determined by gel permeation chromatography (GPC/SEC-DV) using a Polymer Char GPC from Polymer Characterisation S.A. Valencia, Spain. The Size Exclusion Chromatograph. AGILENT PL OLEXIS columns (7.5 x 300mm) can be used., Universal calibration of the system can be performed with polyethylene (PE) standards. As solvent (1,2,4-trichlorobenzene, TCB) stabilized with 1g/l di-tert-butyl-paracresol (DBPC) and the chromatograph system can be operated at 160°C. The flow rate of the TCB eluent can be 1.0mL/min.

### Mooney viscosity:

The Mooney viscosity can be measured according to ISO 289.

### Compound testing

### Mooney viscosity:

Mooney viscosity (measuring conditions ML(1+4) @ 100°C) of the curable compounds was determined according to DIN 53523-3 using NatureFlex NP/28 µm film manufactured by Putz Folien, D-65232 Taunusstein Wehen, Germany.

### Compression set (CS):

The compression set of cured compounds can be determined according to DIN ISO 815.

### Tensile strength at break (TS) and elongation at break (EB):

The tensile strength at break (TS) and the elongation at break (EB) were determined on a S2 dumbell at 23°C on cured compounds according to DIN ISO 37.

### Hardness:

The shore A hardness (H) was determined on cured compounds according to DIN ISO 7629-1.

### Experiments

Rubber blends with the different ethylene copolymer rubbers as shown in table 1 and 2 were prepared by blending. Blending was carried out in a rubber internal GK 1,5 L laboratory mixer. First the two ethylene-copolymers were mixed to produce a rubber blend. Then rubber additives were added. In total about 170 to 190 phr of additives were used of which carbon fillers were added first (60-90phr), followed by the addition of the other additives except the curatives: 40-70 phr white filler (aluminum oxide, talcum, silica); 23-40 phr processing oil, 5-7 phr magnesium oxide, 3.5 phr processing aids (fatty acids, polyethylene glycol), 3.75-7.25 phr of antioxidants. The fill factor was 72%, the rotor speed was kept constant at 50 rpm, the temperature reached about 120°C before dropping. After the compound had cooled down, curatives (1.5-2 phr coagent, 3phr first organic peroxide, 5 phr second organic peroxide) were incorporated into the compound on a two-roll mill at ambient conditions. After mixing 10 minutes the compound was finalized. Slabs were sheeted out to use for vulcanization. The rubber sheets were subjected to curing by an electrically heated compression molder in which 2 mm test slabs were cured 13 minutes at 180°C under 100 bars. Properties of the cured samples are shown in table 3. The cured samples (S2 dumbbells with 2 mm thickness) were subjected to heat treatment regimes in air in a circulated air oven as shown in table 4. The properties of the compounds before and after the treatment were compared and are also shown in table 4.

**Table 1: composition of blends:**

| Rubber blend | First Rubber | Second Rubber | Weight ratio of first and second rubber |
|---|---|---|---|
| Example 1 (comparative) | Polymer 1 | Polymer 2 | 2:1 |
| Example 2 (comparative) | Polymer 3 | Polymer 4 | 1:1 |
| Example 3 | Polymer 5 | Polymer 6 | 1:1 |

**Table 2: composition of the polymers used in the blends:**

| Polymer | Mooney viscosity | Content C2 units (wt %) | Content ENB units (wt. %) | Content DCPD units (wt. %) |
|---|---|---|---|---|
| Polymer 1 | 80 | 48 | 5.5 | 0 |
| Polymer 2 | 65 | 67 | 4.7 | 0 |
| Polymer 3 | 42 | 52 | 4.3 | 0 |
| Polymer 4 | 55 | 66 | 4.4 | 0 |
| Polymer 5 | 43 | 55 | 2.3 | 0 |
| Polymer 6 | 63 | 64 | 0 | 1.2 |

| | | | | |
|---|---|---|---|---|
| C2 units = units derived from ethylene; ENB units = units derived from ENB, DCPD units = units derived from dicyclopentadiene. Weight % are based on the total weight of the polymer. Polymer 5: molecular weight of 170-230 kg/mole, δΔ 12-22, MWD 2.7-3.3. Polymer 6: molecular weight of 210-280 kg/mole, δΔ 18-28, MWD 4.0-4.6. Molecular weight, MWD and branching of polymers 3 and 5 and of polymer 2 and 6 were similar. The molecular weight of polymer 1 was the highest and the molecular weight of polymer 4 was between that of polymers 3 and 6. | | | | |

**Table 3: properties of cured rubber compounds made with the blends from examples 1 to 2.**

| | Compound made from Example 1 (comparative) | Compound made from Example 2 (comparative) | Compound made from Example 3 |
|---|---|---|---|
| Rheometer (MDR) 20 minutes at 180°C: | | | |
| Maximum torque [dNm] | 22 | 20 | 15 |
| Delta S [dNm] | 20 | 18 | 13 |
| TS2 [sec] | 41 | 41 | 55 |
| T90 [sec] | 338 | 347 | 392 |
| T95 [sec] | | | 517 |
| Compression set | 13.2 | 17.2 | 15.8 |
| Compound Mooney | 91 | 75 | 62 |

| | | | |
|---|---|---|---|
| Mooney = ML 1+4, 100°C [Mooney units]; Compression set conditions: 22h, 50°C, 25% deformation) [%]. | | | |

**Table 4: properties of compounds made with blends from examples 1 to 2 before and after heat treatment**

| Compound | Example 1 (comparative) | Example 2 (comparative) | Example 3 |
|---|---|---|---|
| Hardness (3 x 2 mm) [shore A] | 67 | 72 | 60 |
| Hardness change after heat ageing at 150°C for 1000 hours | 19 | 12 | 12 |
| Hardness change after heat ageing at 160°C for 96 hours | 4 | 9 | 3 |
| Tensile strength (DIN53504) [N/mm²] | 13.9 | 14.2 | 11.5 |
| Tensile strength after heat ageing at 150°C for 1008 h [N/mm²] | 11.6 (-17%) | 13.0 (-9%) | 11.7 (+2%) |
| Tensile strength after heat ageing at 160°C for 96 h [N/mm²] | 14.7 (-6%) | 14.3 (+1%) | 12.1 (+5%) |
| Elongation at tear (DIN53504) [%] | 329 | 298 | 458 |
| Elongation at tear after heat ageing at 150°C for 1008 h | 90 (-73%) | 122 (-59%) | 253 (-45%) |
| Elongation at tear after heat ageing at 160°C for 96 h | 264 (-20%) | 267 (-10%) | 431 (-6%) |
| Tear propagation strength (DIN ISO 34 A, DIN 53507) [N/mm] | 4.8 | 6.8 | 6.3 |
| Tear propagation strength after heat ageing at 150°C for 1008 h [N/mm] | 7.2 | 2.8 | 3.8 |
| Tear propagation strength after heat ageing at 160°C for 96 h [N/mm] | 5.2 | 6.3 | 7.3 |

The results shown in tables 3 and 4 indicate that blends according to the present disclosure are more heat resistant because their properties changed less after the different heat treatments.

## Claims

1. A composition comprising a blend of a first curable ethylene-copolymer and a second curable ethylene-copolymer wherein
(i) the first curable ethylene copolymer comprises from 50 % to 75 % by weight, of units derived from ethylene, from more than 0.5 % and up to 5.0 % by weight of units derived from one or more diene selected from the group consisting of non-conjugated dienes having from 10 to 30 carbon atoms and comprising at least two cyclic units and having at least two endo-cyclic double bonds, preferably comprising dicyclopentadiene, and further comprising at least 15 % by weight of units derived from propylene, and wherein the amounts expressed in % by weight are based on the total weight of the first ethylene copolymer, which corresponds to 100%;
(ii) the second curable ethylene copolymer comprises from 45 % to 65 % by weight of units derived from ethylene, from about 1.1 to 4.1 % by weight of units derived from one or more diene selected from the group consisting of non-conjugated dienes having from 8 to 24 carbon atoms and having at least one cyclic unit and having an endocyclic double bond and non-terminal exocyclic double bond, preferably comprising ethylidene norbornene, and further comprising at least 15 % by weight, preferably at least 25% by weight of units derived from propylene, and wherein the amounts in expressed in % by weight are based on the total weight of the second ethylene copolymer which corresponds to 100%;
(iii) wherein the weight ratio of the first to the second ethylene copolymer is from about 1: 10 to 10: 1.

2. The composition of claim 1 wherein the first curable ethylene copolymer comprises from 0.5 % and up to 5.0% by weight, based on the total weight of the polymer, of units derived from dicyclopentadiene.

3. The composition of claim 1 or claim 2 wherein the first curable ethylene copolymer comprises from more than 1.0% and up to 4.5% by weight, based on the total weight of the first copolymer, of units derived from dicyclopentadiene and from 55 % to 72 % by weight, based on the total weight of the copolymer, of units derived from ethylene and at least 25 % by weight, based on the total weight of the first copolymer, of units derived from propylene.

4. The composition of any one of the preceding claims wherein the first curable ethylene copolymer has a molecular weight of from 150.000 to 390.000 g/mole g/mole.

5. The composition of any one of the preceding claims wherein the second curable ethylene copolymer comprises from 1.1 to 4.1 % by weight, or from 1.1 to 2.3 % by weight,of the units derived from one or more diene selected from the group consisting of non-conjugated dienes having from 8 to 24 carbon atoms and having at least one cyclic unit and having an endocyclic double bond and non-terminal exocyclic double bond and wherein the one or more dienes are selected from ethylidene norbornene (ENB).

6. The composition of any one of the preceding claims wherein the second curable ethylene copolymer comprises from 1.1 to 2.3 % by weight or from 1.1 to 4.1 % by weight of units derived from ethylidene norbornene (ENB) and from 50 % to 60 % by weight of units derived from ethylene, and at least 30% by weight of units derived from propylene, wherein the % by weight are based on the total weight of the second curable ethylene copolymer.

7. The composition of any one of the preceding claims wherein the second curable ethylene copolymer has a molecular weight from 100.000 to 300.000 kg/mole.

8. The composition of any one of the preceding claims wherein the first and second curable ethylene copolymers are present in a weight ratio of from 5:1 to 1: 5, preferably from 3:1 to 1:3.

9. The composition according to any one of the preceding claims comprising at least 10 % by weight of the rubber blend and further comprising at least one curing agent for curing at least one of the first and second copolymers.

10. The composition according to any one of the preceding claims wherein the composition has a Mooney viscosity ML 1+4 at 100°C of from 45 to 85.

11. Use of the composition according to any one of the preceding claims for making a hose.

12. Use of the composition according to any one of claims 1 to 10 for making a layer for a layered article.

13. Process of making a hose comprising extruding the composition according to any one of claims 1 to 10, into a hose or into a layer of multi-layer hose and subjecting the composition to curing.

14. A hose comprising the composition according to any one of claims 1 to 10 in a cured form.

15. A process for making a composition according to any one of claims 1 to 10 comprising blending the first curable ethylene-copolymer with the second curable ethylene-copolymer, and, optionally, comprising adding one or more additives.

16. An article having a change in elongation at tear, determined according to DIN53504, of less than 10% after a heat treatment in air of 160°C for 96 hours, wherein the cured article comprises the reaction product of a curing reaction, wherein the curing reaction comprises subjecting a composition comprising the blend according to any one of claims 1 to 10 to a curing reaction.

17. The article of claim 16 having a change in tensile strength, determined according to DIN53504, of less than 10% after a heat treatment in air of 150°C for 1008 hours.

18. The article of claims 16 or 17 wherein the article is a coolant hose

## Patentansprüche

1. Eine Zusammensetzung, umfassend einen Blend aus einem ersten härtbaren Ethylen-Copolymer und einem zweiten härtbaren Ethylen-Copolymer, wobei
(i) das erste härtbare Ethylen-Copolymer 50 bis 75 Gew.-% Einheiten, die sich von Ethylen ableiten, mehr als 0,5 und bis zu 5,0 Gew.-% Einheiten, die sich von einem oder mehreren Dienen ableiten, die aus der Gruppe ausgewählt sind bestehend aus nicht konjugierten Dienen mit 10 bis 30 Kohlenstoffatomen und umfassend mindestens zwei cyclische Einheiten und aufweisend mindestens zwei endocyclische Doppelbindungen und vorzugsweise umfassend Dicyclopentadien, und ferner umfassend mindestens 15 Gew.-% Einheiten, die sich von Propylen ableiten, umfasst und wobei sich die in Gew.-% ausgedrückten Mengen auf das Gesamtgewicht des ersten Ethylen-Copolymers, das 100 % entspricht, beziehen;
(ii) das zweite härtbare Ethylen-Copolymer 45 bis 65 Gew.-% Einheiten, die sich von Ethylen ableiten, von etwa 1,1 bis 4,1 Gew.-% Einheiten, die sich von einem oder mehreren Dienen ableiten, die aus der Gruppe bestehend aus nicht konjugierten Dienen mit 8 bis 24 Kohlenstoffatomen und aufweisend mindestens eine cyclische Einheit und aufweisend eine endocyclische Doppelbindung und eine nicht endständige exocyclische Doppelbindung ausgewählt sind und vorzugsweise Ethylidennorbornen umfassen, und ferner mindestens 15 Gew.-%, vorzugsweise mindestens 25 Gew.-%, Einheiten, die sich von Propylen ableiten, umfasst und wobei sich die in Gew.-% ausgedrückten Mengen auf das Gesamtgewicht des zweiten Ethylen-Copolymers, das 100 % entspricht, beziehen;
(iii) wobei das Gewichtsverhältnis von dem ersten zu dem zweiten Ethylen-Copolymer etwa 1:10 bis 10:1 beträgt.

2. Die Zusammensetzung nach Anspruch 1, wobei das erste härtbare Ethylen-Copolymer 0,5 bis zu 5,0 Gew.-%, bezogen auf das Gesamtgewicht des Polymers, Einheiten, die sich von Dicyclopentadien ableiten, umfasst.

3. Die Zusammensetzung nach Anspruch 1 oder Anspruch 2, wobei das erste härtbare Ethylen-Copolymer mehr als 1,0 und bis zu 4,5 Gew.-%, bezogen auf das Gesamtgewicht des ersten Copolymers, an Einheiten, die sich von Dicyclopentadien ableiten, und 55 bis 72 Gew.-%, bezogen auf das Gesamtgewicht des Copolymers, an Einheiten, die sich von Ethylen ableiten, und mindestens 25 Gew.-%, bezogen auf das Gesamtgewicht des ersten Copolymers, an Einheiten, die sich von Propylen ableiten, umfasst.

4. Die Zusammensetzung nach einem der vorhergehenden Ansprüche, wobei das erste härtbare Ethylen-Copolymer ein Molekulargewicht von 150.000 bis 390.000 g/mol aufweist.

5. Die Zusammensetzung nach einem der vorhergehenden Ansprüche, wobei das zweite härtbare Ethylen-Copolymer 1,1 bis 4,1 Gew.-% oder 1,1 bis 2,3 Gew.- % an den Einheiten, die sich von einem oder mehreren Dienen, die aus der Gruppe bestehend aus nicht konjugierten Dienen mit 8 bis 24 Kohlenstoffatomen und aufweisend mindestens eine cyclische Einheit und aufweisend eine endocyclische Doppelbindung und eine nicht endständige exocyclische Doppelbindung ausgewählt sind, ableiten, umfasst und wobei das eine oder die mehreren Diene aus Ethylidennorbornen (ENB) ausgewählt sind.

6. Die Zusammensetzung nach einem der vorhergehenden Ansprüche, wobei das zweite härtbare Ethylen-Copolymer 1,1 bis 2,3 Gew.-% oder 1,1 bis 4,1 Gew.- % an Einheiten, die sich von Ethylidennorbornen (ENB) ableiten, und 50 bis 60 Gew.-% an Einheiten, die sich von Ethylen ableiten, und mindestens 30 Gew.-% an Einheiten, die sich von Propylen ableiten, umfasst, wobei sich die Gew.-%-Angaben auf das Gesamtgewicht des zweiten härtbaren Ethylen-Copolymers beziehen.

7. Die Zusammensetzung nach einem der vorhergehenden Ansprüche, wobei das zweite härtbare Ethylen-Copolymer ein Molekulargewicht von 100.000 bis 300.000 kg/mol aufweist.

8. Die Zusammensetzung nach einem der vorhergehenden Ansprüche, wobei das erste und das zweite härtbare Ethylen-Copolymer in einem Gewichtsverhältnis von 5:1 bis 1:5, vorzugsweise von 3:1 bis 1:3, vorliegen.

9. Die Zusammensetzung nach einem der vorhergehenden Ansprüche, umfassend mindestens 10 Gew.-% des Kautschukblends und ferner umfassend mindestens ein Härtungsmittel zum Härten des ersten und/oder zweiten Copolymers.

10. Die Zusammensetzung nach einem der vorhergehenden Ansprüche, wobei die Zusammensetzung eine Mooney-Viskosität ML 1+4 bei 100 °C von 45 bis 85 aufweist.

11. Verwendung der Zusammensetzung nach einem der vorhergehenden Ansprüche zur Herstellung eines Schlauchs.

12. Verwendung der Zusammensetzung nach einem der Ansprüche 1 bis 10 zur Herstellung einer Schicht für einen Schichtkörper.

13. Verfahren zur Herstellung eines Schlauchs, umfassend das Extrudieren der Zusammensetzung nach einem der Ansprüche 1 bis 10 zu einem Schlauch oder zu einer Schicht eines mehrschichtigen Schlauchs und das Härten der Zusammensetzung.

14. Ein Schlauch, umfassend die Zusammensetzung nach einem der Ansprüche 1 bis 10 in gehärteter Form.

15. Ein Verfahren zur Herstellung einer Zusammensetzung nach einem der Ansprüche 1 bis 10, umfassend das Mischen des ersten härtbaren Ethylen-Copolymers mit dem zweiten härtbaren Ethylen-Copolymer und gegebenenfalls das Zugeben eines oder mehrerer Additive.

16. Ein Gegenstand mit einer Änderung der gemäß DIN 53504 bestimmten Reißdehnung von weniger als 10 % nach Wärmebehandlung in der Luft bei 160 °C für 96 Stunden, wobei der gehärtete Gegenstand das Reaktionsprodukt einer Härtungsreaktion umfasst, wobei man bei der Härtungsreaktion eine Zusammensetzung, die den Blend nach einem der Ansprüche 1 bis 10 umfasst, einer Härtungsreaktion unterwirft.

17. Der Gegenstand nach Anspruch 16 mit einer Änderung der gemäß DIN 53504 bestimmten Zugfestigkeit von weniger als 10 % nach Wärmebehandlung in der Luft bei 150 °C für 1008 Stunden.

18. Gegenstand nach Anspruch 16 oder 17, wobei es sich bei dem Gegenstand um einen Kühlmittelschlauch handelt.

## Revendications

1. Composition comprenant un mélange d'un premier copolymère d'éthylène durcissable et d'un deuxième copolymère d'éthylène durcissable,
(i) le premier copolymère d'éthylène durcissable comprenant de 50 % à 75 % en poids de motifs issus de l'éthylène, de plus de 0,5 % et jusqu'à 5,0 % en poids de motifs issus d'un ou plusieurs diènes choisis dans le groupe constitué par des diènes non conjugués ayant de 10 à 30 atomes de carbone et comprenant au moins deux motifs cycliques et ayant au moins deux doubles liaisons endo-cycliques, préférablement comprenant du dicyclopentadiène, et comprenant en outre au moins 15 % en poids de motifs issus du propylène, et les quantités exprimées en % en poids étant basées sur le poids total du premier copolymère d'éthylène, qui correspond à 100 % ;
(ii) le deuxième copolymère d'éthylène durcissable comprenant de 45 % à 65 % en poids de motifs issus de l'éthylène, d'environ 1,1 à 4,1 % en poids de motifs issus d'un ou plusieurs diènes choisis dans le groupe constitué par des diènes non conjugués ayant de 8 à 24 atomes de carbone et ayant au moins un motif cyclique et ayant une double liaison endo-cyclique et une double liaison exo-cyclique non terminale, préférablement comprenant de l'éthylidène norbornène, et comprenant en outre au moins 15 % en poids, préférablement au moins 25 % en poids de motifs issus du propylène, et les quantités exprimées en % en poids étant basées sur le poids total du deuxième copolymère d'éthylène, qui correspond à 100 % ;
(iii) le rapport en poids du premier sur le deuxième copolymère d'éthylène étant d'environ 1 : 10 à 10 : 1.

2. Composition selon la revendication 1, le premier copolymère d'éthylène durcissable comprenant de 0,5 % et jusqu'à 5,0 % en poids, sur la base du poids total du polymère, de motifs issus du dicyclopentadiène.

3. Composition selon la revendication 1 ou la revendication 2, le premier copolymère d'éthylène durcissable comprenant de plus de 1,0 % et jusqu'à 4,5 % en poids, sur la base du poids total du premier copolymère, de motifs issus du dicyclopentadiène et de 55 % à 72 % en poids, sur la base du poids total du copolymère, de motifs issus de l'éthylène et au moins 25 % en poids, sur la base du poids total du premier copolymère, de motifs issus du propylène.

4. Composition selon l'une quelconque des revendications précédentes, le premier copolymère d'éthylène durcissable ayant un poids moléculaire allant de 150 000 à 390 000 g/mole.

5. Composition selon l'une quelconque des revendications précédentes, le deuxième copolymère d'éthylène durcissable comprenant de 1,1 à 4,1 % en poids, ou de 1,1 à 2,3 % en poids, des motifs issus d'un ou plusieurs diènes choisis dans le groupe constitué par des diènes non conjugués ayant de 8 à 24 atomes de carbone et ayant au moins un motif cyclique et ayant une double liaison endocyclique et une double liaison exocyclique non terminale et le ou les diènes étant choisis parmi l'éthylidène norbornène (ENB).

6. Composition selon l'une quelconque des revendications précédentes, le deuxième copolymère d'éthylène durcissable comprenant de 1,1 à 2,3 % en poids ou de 1,1 à 4,1 % en poids de motifs issus de l'éthylidène norbornène (ENB) et de 50 % à 60 % en poids de motifs issus de l'éthylène, et au moins 30 % en poids de motifs issus du propylène, les % en poids étant basés sur le poids total de la deuxième composition d'éthylène durcissable.

7. Composition selon l'une quelconque des revendications précédentes, le deuxième copolymère d'éthylène durcissable ayant un poids moléculaire de 100 000 à 300 000 g/mole.

8. Composition selon l'une quelconque des revendications précédentes, le premier et le deuxième copolymères d'éthylène durcissable étant présents en un rapport en poids allant de 5 : 1 à 1 : 5, préférablement de 3 : 1 à 1 : 3.

9. Composition selon l'une quelconque des revendications précédentes, comprenant au moins 10 % en poids du mélange de caoutchouc et comprenant en outre au moins un agent de durcissement pour le durcissement d'au moins l'un parmi le premier et le deuxième copolymères.

10. Composition selon l'une quelconque des revendications précédentes, la composition ayant une viscosité Mooney ML 1+4 à 100 °C allant de 45 à 85.

11. Utilisation de la composition selon l'une quelconque des revendications précédentes pour la préparation d'un tuyau.

12. Utilisation de la composition selon l'une quelconque des revendications 1 à 10 pour la préparation d'une couche pour un article stratifié.

13. Procédé de préparation d'un tuyau comprenant l'extrusion de la composition selon l'une quelconque des revendications 1 à 10, en un tuyau ou en une couche de tuyau multicouche et la soumission de la composition à un durcissement.

14. Tuyau comprenant la composition selon l'une quelconque des revendications 1 à 10 sous une forme durcie.

15. Procédé pour la préparation d'une composition selon l'une quelconque des revendications 1 à 10 comprenant un mélange du premier copolymère d'éthylène durcissable avec le deuxième copolymère d'éthylène durcissable, et, éventuellement, comprenant un ajout d'un ou plusieurs additifs.

16. Article ayant un changement d'élongation à la rupture, déterminée selon la norme DIN 53504, inférieur à 10 % après un traitement thermique dans l'air de 160 °C pendant 96 heures, l'article durci comprenant le produit de réaction d'une réaction de durcissement, la réaction de durcissement comprenant la soumission d'une composition comprenant le mélange selon l'une quelconque des revendications 1 à 10 à une réaction de durcissement.

17. Article selon la revendication 16 ayant un changement de la résistance en traction, déterminée selon la norme DIN 53504, inférieur à 10 % après un traitement thermique dans l'air de 150 °C pendant 1 008 heures.

18. Article selon les revendications 16 ou 17, l'article étant un tuyau de réfrigérant.
